(19) Europäisches Patentamt / European Patent Office / Office européen des brevets

(11) **EP 2 466 940 B1**

(12) **EUROPEAN PATENT SPECIFICATION**

(45) Date of publication and mention
of the grant of the patent:
**26.02.2014 Bulletin 2014/09**

(51) Int Cl.:
**H04W 16/10** (2009.01)

(21) Application number: **10015684.3**

(22) Date of filing: **15.12.2010**

(54) **Method and apparatus for control channel protection in heterogeneous cellular networks**

Verfahren und Vorrichtung zum Steuerkanalschutz in heterogenen Mobilfunknetzen

Procédé et appareil de protection de canal de contrôle dans les réseaux cellulaires hétérogènes

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.06.2012 Bulletin 2012/25**

(73) Proprietor: **MIMOON GmbH
47057 Duisburg (DE)**

(72) Inventors:
• **Marandin, Dimitry
47057 Duisburg (DE)**
• **Wu, Hanguang
47057 Duisburg (DE)**

(74) Representative: **Eisenführ Speiser
Patentanwälte Rechtsanwälte PartGmbB
Postfach 31 02 60
80102 München (DE)**

(56) References cited:
**US-A1- 2010 238 884**

• **"LTE; Evolved Universal Terrestrial Radio
Access (E-UTRA); TDD Home eNode B (HeNB)
Radio Frequency (RF) requirements analysis
(3GPP TR 36.922 version 9.0.0 Release 9)",
TECHNICAL REPORT, EUROPEAN
TELECOMMUNICATIONS STANDARDS
INSTITUTE (ETSI), 650, ROUTE DES LUCIOLES ;
F-06921 SOPHIA-ANTIPOLIS ; FRANCE, vol.
3GPP RAN 4, no. V9.0.0, 1 April 2010 (2010-04-01),
XP014046302,**

• **"3rd Generation Partnership Project; Technical
Specification Group Radio Access Network;
Evolved Universal Terrestrial Radio Access (E-
UTRA); Physical layer procedures (Release 9)",
3GPP STANDARD; 3GPP TS 36.213, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, no. V9.3.0, 17 September 2010
(2010-09-17) , pages 1-80, XP050442094,
[retrieved on 2010-09-17]**

• **CMCC ET AL: "Text proposal on LTE TDD HeNB
interference control", 3GPP DRAFT; R4-100178,
3RD GENERATION PARTNERSHIP PROJECT
(3GPP), MOBILE COMPETENCE CENTRE ; 650,
ROUTE DES LUCIOLES ; F-06921 SOPHIA-
ANTIPOLIS CEDEX ; FRANCE, vol. RAN WG4, no.
San Francisco, USA; 20100222, 12 February 2010
(2010-02-12), XP050425713, [retrieved on
2010-02-12]**

• **KYOCERA: "Interference Management for
Control Channels in Outdoor Hotzone Scenario",
3GPP DRAFT; R1-102678_CCH_OUTHOT, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, vol. RAN WG1, no. Montreal,
Canada; 20100510, 4 May 2010 (2010-05-04),
XP050419887, [retrieved on 2010-05-04]**

**Description**

FIELD OF THE INVENTION

The present invention relates to a method, apparatus and computer program product for interference management in a heterogeneous cellular network with different cell access criteria or restrictions, e.g. where home base stations with closed access are deployed on the same channel as the macro network.

BACKGROUND OF THE INVENTION

Home base stations (HBTSs, also known as "femto cells") are small base stations operating in licensed cellular bands. They are small and inexpensive, and transmit at low power. They are placed in individual homes and backhauled onto the operator's network via conventional digital subscriber line (DSL) or cable broadband access (or, if available, fiber access).

Deployment of HBTSs helps to reduce the capital and operational expenditure of operators while enhancing system indoor coverage and capacity. However, interference is an issue that needs to be addressed to successfully deploy a HBTS layer over existing macro cell networks. The impact of interference depends on the techniques used for allocating spectral resources to the macro cell and femto cell layers, as well as on the techniques used to access the femto cells. In an orthogonal deployment of macro cells and femto cells, where separate orthogonal carriers are assigned to each layer, cross-layer interference is entirely removed. Carriers are said to be orthogonal if they are uncorrelated. However, this happens at the expense of decreasing the spectral efficiency of the network. For co-channel deployments, where the carriers are shared between both layers, new interference management techniques are required for intelligent allocation of the power, frequency, and time resources of the HBTS.

In co-channel deployments, interference is strongly dependent on the type of access control, which determines if a given user can or cannot connect to the HBTS. If cell access restrictions apply, such as closed access (also referred to as closed subscriber group (CSG) by 3rd Generation Partnership Project (3GPP)), HBTS allows access to only a subset of users, defined by the HBTS owner. In scenarios with CSG-HBTS, non-subscribers are not allowed to connect to the network through a femto cell, even if its signal is stronger than that of the closest macro cell. Therefore, strong cross-layer interference exists between macro- and femto-layers.

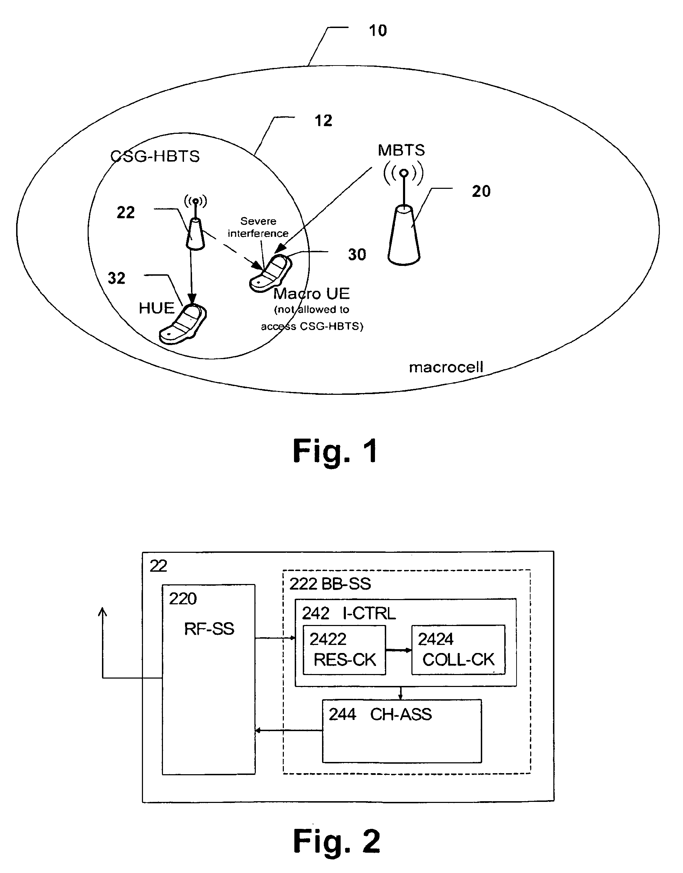

Fig. 1 illustrates a case of downlink interference from a CSG-HBTS 22 to a terminal device served by a macro cell 10, e.g., a macro user equipment (UE) 30. The macro UE 30 is under the coverage of the CSG-HBTS 22 in a femto cell 12 but cannot access it because the macro UE 30 does not belong to CSG users. Hence, the macro UE 30 accesses a macro cell 10 controlled by a macro base station (MBTS) 20. However, being under the coverage of the MBTS 20, the macro UE (victim) suffers from downlink (DL) interference from the CSG-HBTS 22 (aggressor). It is likely that macro UEs at the edge of the macro cell 10 near the femto cell 12 of the CSG-HBTS 22 suffer from severe interference from it.

From this example, it is clear, that one of the challenging cases of cross-layer interference occurs when a macro UE enters a coverage area of a CSG-HBTS and is not allowed to handover/reselect to the CGG-HBTS.

To avoid the above interference scenario, the CSG-HBTS owner can authorize guest macro UEs in a fast manner so that they gain access to the femto cell. However, the list of authorized users is controlled by the network operator, resides in the core network, and has to be manually updated by the femto cell owner. This is not convenient and thus new interference cancellation and avoidance techniques for co-channel deployment macro cells and femto cells are being designed.

These techniques can be categorized as power control of HBTS, antenna management at HBTS, and smart allocation of frequency/time resources.

In the power control option, the HBTS adjusts the transmitted power to ensure sufficient coverage to femto cell subscribers and minimize leakage of power outside the premises. For example, it can set its power to a value that on average is equal to the received signal strength from the closest macro cell in a target femto cell radius. This method reduces interference probability for macro UE at the proximity of HBTS, but this method cannot protect data and control channel when macro UE is close to the HBTS.

In the antenna management option, sector antennas in the HBTSs can minimize overlapping of coverage areas of macro and femto cells. Furthermore, the use of several radiating elements to perform beamforming and adapting the coverage area of the femto cell to the shape of the household has also been suggested. This method reduces interference probability for macro UE at the proximity of HBTS, but this method cannot protect data and control channel when macro UE is close to or within the HBTS range.

In the smart allocation option, orthogonal frequency-division multiple access (OFDMA) femto cells have the advantage of allowing the allocation of orthogonal frequency/time resources to users. Thus, interference avoidance can be achieved through subchannel and time slot allocation. Application of these techniques relies on the ability of femto cells to monitor (sniffer) the environment. This could resolve the interference problem for the data transmissions. However, control channels that span the entire bandwidth, such as the Physical Downlink Control Channel (PDCCH) of Long Term Evolution (LTE) networks, would still be affected.

Some techniques have been considered mainly for data interference management, as described for example in proposal R4-093439, "Way forward on HeNB interference management". However, control channel interference management is equally important since improved data signal-to-interference-plus-noise ratio (SINR) is not useful if the UEs cannot receive the required control channel. Thus, it is vital to have techniques that address control channel interference.

One solution to protect the PDCCH of macro UEs is proposed in the European Telecommunications Standards Institute (ETSI) specification TR 136 921 V9.0.0: "Time shifting for overlapped carriers with frame time shifting at symbol level". This solution requires synchronization of the HBTS and the MBTS. The HBTS shifts its transmission by k symbols (relative to MBTS frame timing), where k denotes the size of control region of the MBTS. Thus, the HBTS avoids overlap of its control region with the MBTS control region. Additionally, it can use power reduction or muting on Physical Downlink Shared Channel (PDSCH) symbol(s) that overlap the control region of the MBTS. However, this solution requires that the last k symbols of the HBTS PDSCH region would be interfered from the MBTS control region. In a similar way, some symbols in the PDSCH region of the MBTS would be interfered from the HBTS.

Hence, protection of a control channel of a victim terminal still needs to be addressed. Control channel interference management is very important since data channels (e.g. PDSCH in LTE) cannot be received and a UE cannot be even paged, if the UEs cannot receive the required control channel (PDCCH). Solutions have been proposed to mitigate this drawback but at cost of reducing data rates.

Document "LTE; Evolved Universal Terrestrial Radio Access (E-UTRA); TDD Home eNode B (HeNB) Radio Frequency (RF) requirements analysis (3GPP TR 36.922 version 9.0.0 Release 9)" discloses different possible Home enhanced Node B (HeNS) interference scenarios which are the same for both time division duplexing (TDD) and frequency division duplexing (FDD), wherein the main difference may exist in how to model the interference, and wherein it is proposed to evaluate the control interference based on the assumption that different base stations are synchronized to ensure the system performance. Interference control can be related to HeNS measurements, to HeNS self-configuration, to uplink interference control, to downlink interference control, or to hybrid cells. In other words, it is disclosed examples for a method for determining presence of a victim terminal device which can be served by a neighboring or overlapping cell.

US 2010/0238884 A1 discloses a technique for an adaptive association and joint association and resource partitioning in a wireless communication network, wherein association and resource partitioning may be performed jointly to select serving base stations for user equipments and to allocate available resources to base stations. In another aspect, adaptive association may be performed to select serving base stations for user equipments. A base station can compute local metrics for different possible actions related to association and resource partitioning or only association. The base station can receives local metrics for the possible actions from at least one neighbor base station and can determine overall metrics for the possible actions based on the computed and received local metrics. The base station can determine serving base stations for a set of user equipments user equipments and resources allocated to the set of base stations (or just serving base stations for the set of user equipments) based on the overall metrics for the possible actions.

Document "3rd Generation Partnership Project; Technical Specification Group Radio Access Network; Evolved Universal Terrestrial Radio Access (E-UTRA); Physical layer procedures (Release 9)" discloses physical downlink control channel procedures relating to a user equipment procedure for determining physical downlink control channel assignment or to physical downlink control channel (PDCCH) validation for semi-persistent scheduling, wherein the problem of different assignment procedures is broached.

## SUMMARY

It is an object of the present invention to provide an improved interference management for control channels of heterogeneous cellular networks, which does not lead to reduced data rates.

This object is achieved by a method as claimed in claim 1, an apparatus as claimed in claim 8, and a computer program product as claimed in claim 15.

Accordingly, the control channel of victim terminal devices of neighboring or overlapping cells can be protected from interference caused by a target cell of the cellular network. This is of particular importance in cases of co-channel deployment of macro and femto cells. The proposed control channel interference management ensures collision-free or at least collision-reduced channel assignment in the target cell. This enables proper receipt of the control channel at a victim terminal device to allow data transfer. The proposed solution thus mitigates control channel interference at the victim terminal device.

The target cell may be a femto cell controlled by a home base station and the neighboring or overlapping cell may be a macro cell controlled by a macro base station. Due to the fact that the home base station serves much less number of terminal devices (e.g. UEs) than the macro base station, the probability to find control channel candidates that are at most orthogonal to the control channel of a macro terminal device is high. Therefore, protection of the control channel of the victim terminal device is possible.

The protected control channel may be a PDCCH of an LTE network. However, any type of control channel of any type of terminal device in a cellular network can be protected by the proposed interference management solution.

In a more specific exemplary implementation, the presence of the victim terminal device may be determined based on at least one of detected uplink transmissions from the victim terminal device and signaling from the neighboring or overlapping cell.

In the above or another more specific exemplary implementation, the potential resources are defined by a set of control channel candidates consisting of control channel elements (CCEs). Each control channel candidate (e.g. PDCCH candidate) corresponds logically to a specific aggregation level.

Common resources of the control channel (also called common search space) destined for all terminal devices (including the victim terminal device) in the cell are derived based on a number of CCEs of the control channel (e.g. PDCCH). The potential resources destined for the specific victim terminal device are derived from an identity of the victim terminal device, a subframe number and a number of CCEs of the control channel (e.g. PDCCH). Each CCE is mapped to resource elements.

In the above or another more specific exemplary implementation, a number of CCEs in neighboring or overlapping cells is obtained by reading a master information block broadcast from the neighboring or overlapping cell, calculating a number of resource element groups available for all control channels and subtracting a number of resource element groups available for control channels other than the managed control channel (e.g. PDCCH).

In a LTE-specific implementation of the control channel, a subblock interleaver used for the PDCCH is subject to a so-called "push-pop" effect. This means that for some CCEs of the control channel of the target cell (e.g. a femto cell), the number of collisions with CCEs of the victim terminal device's potential resources (in common and dedicated search space) is lower than for other CCEs.

In the above or another more specific exemplary implementation, the collision metric of control channel candidates (e.g. PDCCH candidates) may be derived from a collision matrix which indicates overlap between resource elements of the control channel of the target cell and resource elements of the control channel of the neighboring or overlapping cell. A value of the collision metric depends also on the number of aggregation levels at which overlapping occurs.

The above apparatus may be implemented as a hardware circuit integrated on a single chip or chip set, or wired on a circuit board. As an alternative, at least parts of the apparatus may be implemented as a software program or routine controlling a processor or computer device. As an example, the software program or routine may be implemented in C type programming language.

Other advantageous modifications are defined in the dependent claims.

BRIEF DESCRIPTION OF THE DRAWINGS

The invention will now be described in greater detail based on embodiments with reference to the accompanying drawings in which:

Fig. 1 shows a schematic network architecture with overlapping macro and femto cells, where the interference management according to the suggested embodiments can be applied;

Fig. 2 shows a schematic block diagram of an access device according to a first embodiment;

Fig. 3 shows a flow diagram of a channel protection procedure according to a second embodiment; and

Fig. 4 shows a schematic block diagram of software-based implementation according to a third embodiment.

DESCRIPTION OF THE EMBODIMENTS

In the following, exemplary embodiments of the present invention will be described based on an implementation in a LTE network with overlapping macro and femto cells. However, it is to be noted that the present invention can be applied in various other types of cellular or wireless access networks which can be accessed by terminal devices via control channels.

The PDCCH is an LTE control channel that carries the resource assignments for UEs, which are contained in a downlink control information (DCI) message. Multiple PDCCH messages can be transmitted in the same subframe using CCEs each of which is a nine set of four resource elements (REs) known as resource element groups (REG). QPSK modulation is used for the PDCCH. Additionally, a Physical Control Format Indicator Channel (PCFICH) is provided, which carries a control frame indicator (CFI) which includes the number of OFDM symbols used for control channel transmission in each subframe. Moreover, a Physical Hybrid ARQ Indicator Channel (PHICH) is provided, which carries the hybrid ARQ (HARQ) acknowledgement/non-acknowledgement (ACK/NAK) which indicates to the UE whether the base station (i.e. eNodeB) correctly received uplink user data.

It is desired to map the nine REGs of each CCE to physical resource elements (REs) distributed throughout the time and frequency domains. It improves time and frequency diversity, inter-cell interference randomization when not all CCEs are used, and distributes power among different control symbols when not all CCEs are used. The REGs are interleaved at the base station transmitter and deinter-leaved at the UE receiver, where the interleaver pattern also depends on the identity of the base station (i.e. cell ID). When mapping the interleaved REG sequence to physical REs at the base station, they are mapped firstly across a predetermined number data symbols for a fixed frequency and then across frequencies.

According to the embodiments, a control channel, such as the PDCCH of the LTE network is protected by performing channel assignment in a possibly interfering cell under consideration of potentially colliding resource elements. Thereby, only those resource elements with little or no risk of collision with resource elements potentially assigned to the victim UE are assigned in the interfering cell. This approach is also advantageous when the known property of the subblock interleaver used for the PDCCH in LTE networks is employed. From previous research, it is known that the subblock interleaver for the PDCCH is subject to a so-called "push-pop" effect. This means that for some control channel elements (CCEs) of the PDCCHs of a femto cell the number of collisions with possible CCEs of a victim UE is lower than for other CCEs (especially if the total number available CCEs is large). This comes from a fundamental limitation of the subblock interleaver used in LTE. Thus, the femto cell can select a PDCCH candidate consisting of CCEs that have the smallest probability to collide with CCEs that are part of PDCCH candidates of the victim UE. The PDCCH candidates of the victim UE are derived from an identity (cell ID) of the macro base station and an ID of the victim UE (s), a subframe number and a number of CCEs of the control channel of the macro base station.

Fig. 2 shows a schematic block diagram of an access device according to a first embodiment, such as the CSG-HBTS 22 shown in Fig. 1.

The access device comprises an antenna subsystem which might consist of one or several antennas or antenna elements for achieving a directed or non-directed antenna characteristic. The antenna subsystem is connected to a radio frequency (RF) subsystem (RF-SS) 220 which may include an analog receiver chain (not shown) followed by an analog-to-digital (ADC) converter (not shown) which converts the received signal to the digital domain and outputs a stream of reception data frames to be forwarded to a baseband subsystem (BB-SS) 222 which could be implemented by at least one digital signal processor (DSP). Additionally, the RF subsystem 220 comprises a transmission chain (not shown) which supplies an analog transmission signal received from the baseband subsystem 222 via a digital-to-analog converter (not shown) to the antenna subsystem for wireless transmission.

According to the first embodiment, an interference controller 242 is provided, which may be implemented as a part of the baseband subsystem 222. The interference controller 242 determines the presence of a victim UE served by a neighboring or overlapping cell. The interference controller 242 comprises a resource checking function or functionality 2422 for identifying, e.g. based on the ID of the determined victim UE, a dedicated search space (i.e. potential resources) of the victim UE in a control channel of the neighboring or overlapping cell. Then, a collision checking function or functionality 2424 of the interference controller 242 calculates a collision metric for PDCCH candidates of the control channel in the femto cell knowing potential resources used for the victim UE of the neighboring or overlapping cell.

The collision metric which indicates a collision risk is then used by a channel assignment function or functionality 244, which may be provided in the interference controller 242 or a separate channel controller or other controller of the baseband subsystem 222 comprises a resource checking function, to assign resource elements to a channel of the served own cell (target cell) based on the collision metric. Thus, channel assignments in the femto cell can be controlled to minimize interference with the control channel of the victim UE.

It is noted that the interference controller 242, the resource checking functionality 2422, the collision checking functionality 2424 and the channel assignment functionality 244 may be implemented as discrete signal processing circuits or, alternatively, as threads or software routines.

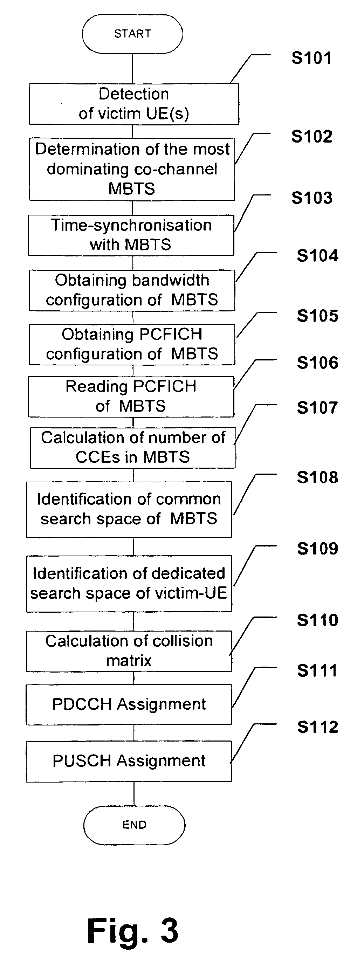

Fig. 3 shows a flow diagram of a channel protection procedure at a CSG-HBTS according to a second exemplary embodiment.

In step S101, victim UE(s) is/are detected. DL interference (e.g. caused by a HBTS) is likely a problem when this HBTS becomes the "best cell" as part of the macro UE measurements. The interference problem is relevant when a macro UE cannot handover to a CSG-HBTS, even if it has strongest signal strength from it.

More specifically, the CSG-HBTS may use approaches described in 3GPP specification TR 36.921 "Evolved Universal Terrestrial Radio Access (E-UTRA); FDD Home eNodeB (HeNB) Radio Frequency (RF) requirements analysis", Release 9 to determine the presence of victim UE(s) in its vicinity. This may thus be achieved based on detected uplink transmissions, wherein the two options of detection based on interference over thermal (IoT) and detection based on uplink (UL) reference signal (RS) could be used. As another option, the presence of a victim UE may be determined based on signaling from the MBTS which serves the victim UE.

Each macro UE reports a cell-specific signal quality metric of the neighboring cells. For each macro UE, the serving MBTS ranks reported CSG cells according to their signal quality. MBTS is aware about cell IDs reserved for CSG cells so it can differentiate CSG cells from macro cells in the reports. However, cell IDs of CSG cells may not be unique under MBTS coverage area. Thus, MBTS may not identify the "aggressor" HBTS uniquely from macro UE measurements. In this case, the MBTS may additionally instruct the UE to read and to report the relevant system information (e.g. global cell identity) of the specific HBTS. If the cell-specific signal quality metric of neighboring CSG cells around the macro UE is much higher relative to cell-specific signal quality metric of the serving cell, the MBTS may consider the macro UE as a victim UE. The macro cell could share the information about victim UE(s) with the CSG cell through standardized interface (e.g. X2, S1 interfaces) or over a non-standardized interface.

In step S102, the most dominating macro cell is detected based on measurements from UEs attached to CSG-HBTS or via a sniffer within CSG-HBTS. Then in step S103, time synchronization with the MBTS is achieved, wherein the CSG-HBTS synchronizes with the MBTS with an assistance of primary and secondary synchronization signals from the MBTS.

In step S104, the bandwidth configuration of the MBTS is obtained by the CSG-HBTS. To achieve this, a sniffer provided at the CSG-HBTS may read a master information block (MIB) of the macro cell from a broadcast channel (BCH). This value represents a maximum number of resource blocks (RBs) available.

Then, in step S105, a number $N_{REG\ Total}$ of available REGs for downlink control channels in the MBTS is calculated to obtain the PCFICH configuration of the MBTS.

Firstly, a number of REs per symbol is calculated by using the following equation:

$$N_{RE\ per\ symbol}^{MBTS} = N_{dl\ rb}^{MBTS} \cdot N_{sc},$$

where $N_{dl\ rb}^{MBTS}$ is a maximum number of RBs obtained in step S104,

$N_{sc}$ is the number of subcarriers per RB, $N_{sc} = 12$ in LTE.

The REs occupied by reference signals (RSs) are not included within the REGs. Thus, a number of REGs in the first orthogonal frequency division multiplexing (OFDM) symbol is calculated taking into account that in this symbol two RS ($N_{RS\ per\ REG} = 2$) surround each REG:

$$N_{REG\ 1st\ OFDM\ symbol} = N_{RE\ per\ symbol} / (N_{RE\ per\ REG} + N_{RS\ per\ REG})$$

A number of REGs in the second and third OFDM symbols are calculated as:

$$N_{REG\ OFDM\ symbol} = N_{RE\ per\ symbol} / N_{RE\ per\ REG}$$

In step S106, the PCFICH of the MBTS is read.

Thus, if a number of PDCCH symbols signaled from PCFICH, $N_{PDCCH\ MBTS} = 1$:

$$N_{REG\ Total} = N_{REG\ 1st\ OFDM\ symbol}$$

If

$$\text{If } N_{PDCCH\ MBTS} = 2: \ N_{REG\ Total} = N_{REG\ 1st\ OFDM\ symbol} + N_{REG\ OFDM\ symbol}$$

If

$$\text{If } N_{PDCCH \ MBTS} = 3: \ N_{REG \ Total} = N_{REG \ 1st \ OFDM \ symbol} + N_{REG \ OFDM \ symbol} + N_{REG \ OFDM \ symbol}$$

A calculation of the number of REGs reserved for the PHICH is needed to subtract those REGs from the REGs of the PDCCH.

The number of PHICH groups is calculated as

$$N_{PHICH}^{group} = \begin{cases} ceil(N_g \cdot \dfrac{N_{dl_{rb}}}{g}) for \ normal \ CP \\ 2 * ceil(N_g \cdot \dfrac{N_{dl\_rb}}{g}) for \ extended \ CP \end{cases}$$

where $N_g$ is broadcast by MBTS.

The number of PHICH groups increases with $N_{dl \ rb}$ because for larger bandwidths, a larger number of UEs can transmit simultaneously and hence require transmission of a larger number of hybrid ARQ (HARQ) ACK/NACK responses. Each group is mapped to 3 REGs. Thus, a total number of REGs reserved for PHICH is calculated finally as

$$N_{REG}^{PHICH} = 3 \cdot N_{PHICH}^{group}$$

Then, the number of REGs available for the PDCCH in the MBTS is calculated by subtracting the number of REGs reserved for PHICH and PCFICH from the number of available REGs.

$$N_{REG}^{PDCCH} = N_{REG\_Total} - N_{REG}^{PHICH} - N_{REG}^{PCFICH},$$

where $N_{REG}^{PCFICH}$ is the number of REGs used for the PCHICH ( $N_{REG}^{PCFICH} = 4$ in LTE).

Then, in step S107, the number of CCEs available for the PDCCH in the MBTS is calculated. A control channel element (CCE) consists of nine REGs. Thus, the number of CCEs available for PDCCH in MBTS $N_{CCE}^{MBTS}$ can be calculated as:

$$N_{CCE}^{MBTS} = N_{REG}^{PDCCH} / 9$$

In the next step S108, a common search space of the MBTS is identified. The victim UE monitors a cell common search space at aggregation levels 4 and 8. A search space is defined by a set of PDCCH candidates.

As described in 3GPP specification TS 36.213, "Evolved Universal Terrestrial Radio Access: Physical Layer Procedures", CCEs corresponding to PDCCH candidate m at aggregation level L $\in$ {4, 8} are given by:

$$L \cdot (m \bmod \left\lceil \frac{N_{CCE}^{MBTS}}{L} \right\rceil) + i,$$

$i$ = 0,.., $L$ - 1 and $m$ = 0,.., $M^{(L)}$ - 1. $M^{(L)}$ is the number of PDCCH candidates to monitor at aggregation level $L$. $M^{(4)}$ = 4 and $M^{(8)}$ = 2 for the common search space.

In step S109, a dedicated search space of the victim UE in the MBTS is identified. Knowing the ID of the victim UE, the subframe number and the number of CCEs, the CSG-HBTS derives the search space of the victim UE in the control channel. This step is performed based on known victim UE ID(s).

Similarly, CCEs corresponding to PDCCH candidate $m$ at aggregation level $L \in$ {1, 2, 4, 8} are given by:

$$L \cdot ((Y_k + m) \bmod \left\lceil \frac{N_{CCE}^{MBTS}}{L} \right\rceil) + i,$$

where $Y_k$ is defined by

$$Y_k = (A \cdot Y_{k-1}) \bmod D$$

where $Y_{-1}$ = UE id, $A$ = 39827, $D$ = 39827 and $k$ = [$n_s$ / 2], where $n_s$ is the slot number within a radio frame.

In step S110, a collision matrix is calculated. The CSG-HBTS knows a cyclic shift of the subblock interleaver of the MBTS as it depends on the MBTS cell ID. It also knows the CCEs of the common search space and the victim UE's dedicated search space and thus can calculate to which REs a specific MBTS CCE is mapped.

Hence, a matrix $K_{ij}(i = 0... N_{RE\ per\ symbol}^{HBTS}$ -1; $j = N_{PDCCH\ HBTS}$ -1) can be constructed as follows:

$K_{ij}$ = 1 if $RE_{i,j}$ of the HBTS overlaps with the same RE of the MBTS that was a part of the MBTS's CCE contributing to the common search space of the MBTS or to the victim UE's dedicated search space(s) at one aggregation level;

$K_{ij}$ = 2 if $RE_{i,j}$ of the HBTS overlaps with the same RE of the MBTS that was a part of the MBTS's CCE contributing to the common search space of the MBTS or to the victim UE's dedicated search space(s) at two aggregation levels;

$K_{ij}$ = 3 if $RE_{i,j}$ of the HBTS overlaps with the same RE of the MBTS that was a part of the MBTS's CCE contributing to the common search space of the MBTS or to the victim UE's dedicated search space(s) at three aggregation levels;

$K_{ij}$ = 4 if $RE_{i,j}$ of the HBTS overlaps with the same RE of the MBTS that was a part of the MBTS's CCE contributing to the common search space of the MBTS or to the victim UE's dedicated search space(s) at four aggregation levels.

Additionally, the following special case can be identified:

$K_{ij}$ = 1 for REs of the HBTS overlapping with the PCFICH of the MBTS, reserved for the PHICH of the MBTS and occupied by the RS of the MBTS:

$$N_{RE\_per\_symbol}^{HBTS} = N_{dl\_rb}^{HBTS} \cdot N_{sc},$$

where $N_{dl\_rb}^{MBTS}$ i is a maximum number of RBs calculated as described in step S104,

$N_{sc}$ is number of subcarriers per RB, $N_{sc}$ = 12 in LTE

The HBTS can then construct a CCE collision matrix $Z_v(v = 0...N_{CCE}^{HBTS} - 1)$, ' where

$$Z_v = \sum_{j=D}^{N_{RE\_per\_symbol}^{HBTS}-1} \sum_{j=D}^{\max(N_{PDCCH}^{HBTS}-1, N_{PDCCH}^{MBTS}-1)} K_{ij}\delta_{ij}(v),$$

where $\delta_{ij}(v) = 1$ if CCE $v$ of HBTS is mapped after subblock interleaving to a set of REs that includes RE $K_{ij}$,

$N_{PDCCH\ HBTS}$ is the length of the control region of the HBTS.

In step S111, interference-related PDCCH assignment is performed in the HBTS. When a PDCCH candidate needs to be selected, the HBTS evaluates available PDCCH candidates for scheduling own UEs based on the above PDCCH candidate collision metric $C_{m,l}$:

$$C_{m,l} = \sum_{j=D}^{l-1} \sum_{v=D}^{N_{CCE}^{HBTS}-1} Z_v \theta_{m,l(v)}$$

$m = 0,...,M^{(L)}$. $M^{(L)}$ is the number of PDCCH candidates to monitor in the given search space at aggregation level $l$. $M^{(4)} = 4$ and $M^{(8)} = 2$ for the common search space.

$\theta_{m,l}(v) = 1$ if CCE $v$ is a part of PDCCH candidate $m$ at aggregation level $l$, otherwise $\theta_{m,l}(v) = 0$.

$$\theta_{m,l}(v) = 1 \ \ if \ \ exists \ \ i = 0,...,1 \ \ such \ \ as \ \ 1 \cdot (m \ \ \mathrm{mod}\left[\frac{N_{CCE}^{HBTS}}{L}\right]) + i = v$$

To minimize potential interference, the HBTS picks up PDCCH candidates at selected aggregation level $l$ with lowest $C_{m,l}$.

Finally, in step S112, PDSCH assignment in performed in the HBTS. If the number of PDCCH symbols signaled from the PCFICH in the macro cell is larger than the number of PDCCH symbols in the femto cell ( $N_{PDCCH}^{MBTS} > N_{PDCCH}^{HBTS}$ ), a collision metric is calculated for each RB in the femto cell as follows:

$$U_k = \sum_{j=D}^{N_{RE\_per\_symbol}^{HBTS}-1} \sum_{j=N_{PDCCH}^{HBTS}}^{N_{PDCCH}^{MBTS}-1} K_{ij}\sigma_{ij}(k),,$$

where $\sigma_{ij}(k) = 1$ if RB $k$ ($k = 0 ... N_{dl\ rb}^{HBTS} - 1$) includes RE corresponding $K_{ij}$.

The HBTS takes into account $U_k$ during PDSCH scheduling trying to avoid using RBs with high metric $U_k$.

The above channel protection procedure at the HBTS thus serves to minimize interference of assigned channels with the PDCCH of the victim UE.

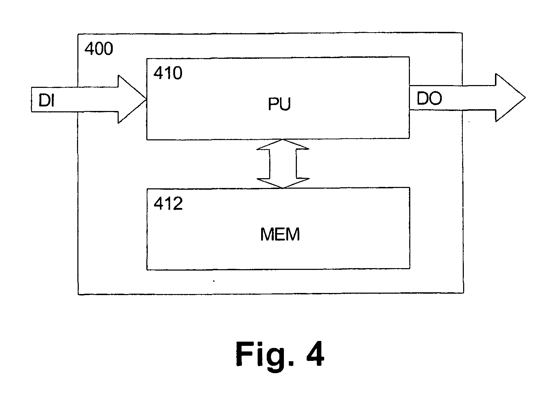

Fig. 4 shows a schematic block diagram of an alternative software-based implementation according to a third embodiment. The required functionalities can be implemented in the second DSP 31 with a processing unit 410, which may be any processor or computer device with a control unit which performs control based on software routines of a control program stored in a memory 412. The control program may also be stored separately on a computer-readable medium. Program code instructions are fetched from the memory 412 and are loaded to the control unit of the processing unit 410 in order to perform the processing steps of Fig. 3, which may be implemented as the above mentioned software routines. The processing steps may be performed on the basis of input data DI and may generate output data DO. In case of the CSG-HBTS, the input data DI may correspond to the required information derived from the victim UE or its macro cell (i.e. MBTS), and the output data DO may correspond to the desired channel allocation for minimized interference.

Consequently, the functionalities of the above embodiments may be implemented as a computer program product comprising code means for generating each individual step of the frame alignment procedure when run on a computer device or data processor of the respective entity.

In summary, a method and apparatus for protecting a control channel of a neighboring or overlapping cell from interference caused by a target cell in a cellular network have been described. To achieve this, the presence of a victim terminal device served by the neighboring or overlapping cell is determined based on at least one of detected uplink transmissions from said victim terminal device and signaling from said neighboring or overlapping cell and potential resources of the victim terminal device in the control channel of the neighboring or overlapping cell are identified, wherein said identifying of said potential resources is performed by determining an identity of said victim terminal device, a subframe number and a total number of control channel elements available for said control channel in said neighboring or overlapping cell. A collision metric for channel resources in the target cell (12) is calculated, the collision metric indicating a degree of collision with the potential resources used for the victim terminal device (30) in the neighboring or overlapping cell (10), and resources are assigned to a control or data channel of the target cell based on the collision metric.

It is apparent that the invention can easily be extended to any transceiver device and system and is not restricted to the SDR technology area. The proposed embodiments can be implemented in connection with any transceiver device at a base station or access device deployed in a cellular or wireless network. The embodiments may thus vary within the scope of the attached claims.

**Claims**

1. A method of protecting a control channel of a neighboring or overlapping cell (10) from interference caused by a target cell (12) in a cellular network, said method comprising:

   a. determining presence of a victim terminal device (30) served by said neighboring or overlapping cell (10) based on at least one of detected uplink transmissions from said victim terminal device (30) and signaling from said neighboring or overlapping cell (10);
   b. identifying potential resources of said victim terminal device (30) in said control channel of said neighboring or overlapping cell (10), wherein said identifying of said potential resources is performed by determining an identity of said victim terminal device (30), a subframe number and a total number of control channel elements available for said control channel in said neighboring or overlapping cell (10);
   c. calculating a collision metric for channel resources in said target cell (12), said collision metric indicating a degree of collision with said potential resources used for said victim terminal device (30) in said neighboring or overlapping cell (10); and
   d. assigning resources to a channel of said target cell (12) based on said collision metric.

2. The method according to claim 1, wherein said target cell is a femto cell (12) controlled by a home base station (22) and said neighboring or overlapping cell (10) is a macro cell controlled by a macro base station (20).

3. The method according to claim 2, wherein said macro base station (20) is a co-channel base station to said home base station (12).

4. The method according to any one of the preceding claims, wherein said control channel is a physical downlink control channel.

5. The method according to any one of the preceding claims, wherein said totals number of control channel elements of said neighboring or overlapping cell (10) available for said control channel is obtained by reading a master information block broadcast from said neighboring or overlapping cell (10), calculating a number of resource element groups available for all downlink control channels and subtracting a number of resource element groups available for control channels other than said control channel, and calculating a number of control channel elements based on said resource element groups available for said control channel, and wherein said potential resources are defined by a set of candidates consisting of control channel elements on different aggregation levels.

6. The method according to claim 5, further comprising identifying cell common (destined for all terminal devices) potential resources of said control channel in said neighboring or overlapping cell (10) by using a total number of control channel elements available for said control channel.

7. The method according to claim 6, wherein said collision metric is derived for every control channel candidate of said target cell (12) from a collision matrix which indicates overlap between resource elements of said target cell (12) and resource elements of the control channel of said neighboring or overlapping cell (10).

**8.** An apparatus for protecting a control channel of a neighboring or overlapping cell (10) from interference caused by a target cell (12) in a cellular network, said apparatus comprising:

a. an interference controller (242) for determining presence of a victim terminal device (30) served by said neighboring or overlapping cell (10) based on at least one of detected uplink transmissions from said victim terminal device (30) and signaling from said neighboring or overlapping cell (10);
b. a resource identifier (2422) for identifying potential resources of said victim terminal device (30) in said control channel of said neighboring or overlapping cell (10), wherein said resource identifier (2422) is configured to perform said identifying of said potential resources by determining an identity of said victim terminal device (30), a subframe number and a total number of control channel elements available for said control channel in said neighboring or overlapping cell (10);
c. a collision identifier (2424) for calculating a collision metric for channel resources in said target cell (12), said collision metric indicating a degree of collision with said potential resources used for said victim terminal device (30) in said neighboring or overlapping cell (10); and
d. a channel controller (244) for assigning resources to a channel of said target cell (12) based on said collision metric.

**9.** The apparatus according to claim 8, wherein said resource identifier (2422) is adapted to read a master information block broadcast from said neighboring or overlapping cell (10), calculate a number of resource element groups available for all downlink control channels and subtract a number of resource element groups available for control channels other than said control channel to obtain a number of resource element groups available for said control channel, and calculate a number of control channel elements based on said resource element groups available for said control channel.

**10.** The apparatus according to claim 9, wherein said apparatus is adapted to perform said identifying of said potential dedicated resources that could be used by said victim terminal device (30) by determining an identity of said victim terminal device (30), a subframe number and a total number of control channel elements available for said control channel in said neighboring or overlapping cell (10).

**11.** The apparatus according to claim 9, wherein said apparatus is adapted to identify common resources that could be used for all terminal devices in said neighboring or overlapping cell by determining a total number of control channel elements available for said control channel in said neighboring or overlapping cell (10).

**12.** The apparatus according to claim 11, wherein said collision identifier (2424) is adapted to derive said collision metric from a collision matrix which indicates overlap between resource elements of said target cell (12) and resource elements of said neighboring or overlapping cell (10).

**13.** The apparatus according to claim 12, wherein said collision identifier (2424) is adapted to evaluate a set of candidates of control channel on different aggregation levels.

**14.** A network access device comprising an apparatus according to any one of claims 8 to 13.

**15.** A computer program product comprising code means for producing the steps of method claim 1 when run on a computer device.

**Patentansprüche**

**1.** Verfahren zum Schützen eines Steuerkanals einer benachbarten oder überlappenden Zelle (10) vor einer durch eine Zielzelle (12) in einem zellularen Netz verursachten Störung, wobei das Verfahren umfasst:

a. Feststellen einer Anwesenheit eines durch die benachbarte oder überlappende Zelle (10) bedienten Opferendgeräts (30) basierend auf zumindest einem aus erfassten Uplink-Übertragungen von dem Opferendgerät (30) und einer Signalisierung von der benachbarten oder überlappenden Zelle (10);
b. Identifizieren potenzieller Ressourcen des Opferendgeräts (30) in dem Steuerkanal der benachbarten oder überlappenden Zelle (10), wobei das Identifizieren der potenziellen Ressourcen durchgeführt wird durch Bestimmen einer Identität des Opferendgeräts (30), einer Unterrahmennummer und einer Gesamtzahl von für den Steuerkanal in der benachbarten oder überlappenden Zelle (10) verfügbaren Steuerkanalelementen;

c. Berechnen einer Kollisionsmetrik für Kanalressourcen in der Zielzelle (12), wobei die Kollisionsmetrik einen Kollisionsgrad mit den für das Opferendgerät (30) in der benachbarten oder überlappenden Zelle (10) verwendeten potentiellen Ressourcen; und

d. Zuweisen von Ressourcen zu einem Kanal der Zielzelle (12) basierend auf der Kollisionsmetrik.

2. Verfahren nach Anspruch 1, wobei die Zielzelle eine Femtozelle (12) ist, die durch eine Heimatbasisstation (22) gesteuert wird, und die benachbarte oder überlappende Zelle (10) eine Makrozelle, die durch eine Makrobasisstation (20) gesteuert wird.

3. Verfahren nach Anspruch 2, wobei die Makrobasisstation (20) eine Gleichkanalbasisstation zu der Heimatbasisstation (12) ist.

4. Verfahren nach einem der vorhergehenden Ansprüche, wobei der Steuerkanal ein physikalischer Downlink-Steuerkanal ist.

5. Verfahren nach einem der vorhergehenden Ansprüche, wobei die Gesamtzahl der für den Steuerkanal verfügbaren Steuerkanalelemente der benachbarten oder überlappenden Zelle (10) erhalten wird durch Lesen eines von der benachbarten oder überlappenden Zelle (10) rundgesendeten Master-Informationsblocks, Berechnen einer für alle Downlink-Steuerkanäle verfügbaren Anzahl von Ressourcenelementgruppen und Subtrahieren einer Anzahl von für von dem Steuerkanal abweichende Steuerkanäle verfügbaren Ressourcenelementgruppen, und Berechnen einer Anzahl von Steuerkanalelementen basierend auf der für den Steuerkanal verfügbaren Ressourcenelementgruppen, und wobei die potentiellen Ressourcen durch eine Gruppe von Kandidaten bestehend aus Steuerkanalelementen verschiedener Aggregationsniveaus definiert werden.

6. Verfahren nach Anspruch 5, des Weiteren umfassend Identifizieren von zellengemeinsamen (für alle Endgeräte bestimmten) potentiellen Ressourcen des Steuerkanals in der benachbarten oder überlappenden Zelle (10) durch Verwenden einer Gesamtzahl von für den Steuerkanal verfügbaren Steuerkanalelementen.

7. Verfahren nach Anspruch 6, wobei die Kollisionsmetrik für jeden Steuerkanalkandidaten der Zielzelle (12) aus einer Kollisionsmatrix abgeleitet wird, die eine Überlappung zwischen Ressourcenelementen der Zielzelle (12) und Ressourcenelemente des Steuerkanals der benachbarten oder überlappenden Zelle (10) angibt.

8. Vorrichtung zum Schützen eines Steuerkanals einer benachbarten oder überlappenden Zelle (10) vor durch eine Zielzelle (12) in einen zellularen Netz verursachter Störung, wobei die Vorrichtung umfasst:

a. eine Störungssteuereinrichtung (242) zum Bestimmen einer Anwesenheit eines von der benachbarten oder überlappenden Zelle (10) bedienten Opferendgeräts (30) basierend auf zumindest einem aus erfassten Uplink-Übertragungen von dem Opferendgerät (30) und einer Signalisierung von der benachbarten oder überlappenden Zelle (10);

b. einen Ressourcenidentifizierer (2422) zum Identifizieren potentieller Ressourcen des Opferendgeräts (30) in dem Steuerkanal der benachbarten oder überlappenden Zelle (10), wobei der Ressourcenidentifizierer (2422) konfiguriert ist zum Durchführen des Identifizierens der potentiellen Ressourcen durch Bestimmen einer Identität des Opferendgeräts (30), einer Unterrahmennummer und einer Gesamtzahl von für den Steuerkanal in der benachbarten oder überlappenden Zelle (10) verfügbaren Steuerkanalelementen;

c. einen Kollisionsidentifizierer (2424) zum Berechnen einer Kollisionsmetrik für Kanalressourcen in der Zielzelle (12), wobei die Kollisionsmetrik einen Kollisionsgrad mit den für das Opferendgerät (30) in der benachbarten oder überlappenden Zelle (10) verwendeten potentiellen Ressourcen angibt; und

d. eine Kanalsteuereinrichtung (244) zum Zuweisen von Ressourcen zu einem Kanal der Zielzelle (12) basierend auf der Kollisionsmetrik.

9. Vorrichtung nach Anspruch 8, wobei der Ressourcenidentifizierer (2422) ausgestaltet ist zum Lesen eines von der benachbarten oder überlappenden Zelle (10) rundgesendeten Master-Informationsblocks, Berechnen einer Anzahl von für alle Downlink-Steuerkanäle verfügbaren Ressourcenelementgruppen und Subtrahieren einer Anzahl von für von dem Steuerkanal abweichende Steuerkanäle verfügbaren Ressourcenelementgruppen zum Erhalten einer Anzahl von für den Steuerkanal verfügbaren Ressourcenelementgruppen, und Berechnen einer Anzahl von Steuerkanalelementen basieren auf den für den Steuerkanal verfügbaren Ressourcenelementgruppen.

10. Vorrichtung nach Anspruch 9, wobei die Vorrichtung ausgestaltet ist zum Durchführen der Identifizierung der potentiellen überlassenen Ressourcen, die von dem Opferendgerät (30) verwendet werden könnten, durch Bestimmen einer Identität des Opferendgeräts (30), einer Unterrahmennummer und einer Gesamtzahl von für den Steuerkanal in der benachbarten oder überlappenden Zelle (10) verfügbaren Steuerkanalelementen.

**11.** Vorrichtung nach Anspruch 9, wobei die Vorrichtung ausgestaltet ist zum Identifizieren gemeinsamer Ressourcen, die für alle Endgeräte in der benachbarten oder überlappenden Zelle verwendet werden könnten, durch Bestimmen einer Gesamtzahl von für den Steuerkanal in der benachbarten ober überlappenden Zelle (10) verfügbaren Steuerkanalelementen.

**12.** Vorrichtung nach Anspruch 11, wobei der Kollisionsidentifizierer (2424) ausgestaltet ist, zum Ableiten der Kollisionsmetrik aus einer Kollisionsmatrix, die eine Überlappung zwischen Ressourcenelementen der Zielzelle (12) und Ressourcenelementen der benachbarten oder überlappenden Zelle (10) angibt.

**13.** Vorrichtung nach Anspruch 12, wobei der Kollisionsidentifizierer (2424) ausgestaltet ist zum Bewerten einer Gruppe von Kandidaten eines Steuerkanals auf verschiedenen Aggregationsniveaus.

**14.** Netzwerkzugangsgerät mit einer Vorrichtung nach einem der Ansprüche 8 bis 13.

**15.** Computerprogrammprodukt mit Codemitteln zum Erzeugen der Schritte des Verfahrensanspruchs 1 bei dessen Ablauf auf einer Computervorrichtung.

**Revendications**

**1.** Procédé de protection d'un canal d'organisation d'une cellule (10) de voisinage ou de chevauchement d'une interférence provoquée par une cellule (12) cible d'un réseau cellulaire, procédé dans lequel :

a. on détermine la présence d'un dispositif (30) terminal victime desservi par la cellule (10) de voisinage ou de chevauchement sur la base d'au moins l'une de transmissions détectées en liaison montante du dispositif (30) terminal victime et du signalement par la cellule (10) de voisinage ou de chevauchement ;
b. on identifie des ressources potentielles du dispositif (30) terminal victime dans le canal d'organisation de la cellule (10) de voisinage ou de chevauchement, l'identification des ressources potentielles étant effectuée en déterminant une identité du dispositif (30) terminal victime, un nombre de sous-trames et un nombre total d'éléments de canal d'organisation disponibles pour le canal d'organisation dans la cellule (10) de voisinage ou de chevauchement ;
c. on calcule une métrique de collision pour des ressources de canal dans la cellule (12) cible, la métrique de collision indiquant un degré de collision avec les ressources potentielles utilisées pour le dispositif (30) terminal victime dans la cellule (10) de voisinage ou de chevauchement ; et
d. on affecte des ressources à un canal de la cellule (12) cible sur la base de la métrique de collision.

**2.** Procédé suivant la revendication 1, dans lequel la cellule cible est une cellule (12) femto commandée par une station (22) de base domestique et la cellule (10) de voisinage ou de chevauchement est une cellule macro commandée par une station (20) de base macro.

**3.** Procédé suivant la revendication 2, dans lequel la station (20) de base macro est une station de base de même canal que la station (12) de base domestique.

**4.** Procédé suivant l'une quelconque des revendications précédentes, dans lequel le canal d'organisation est un canal d'organisation physique en liaison descendante.

**5.** Procédé suivant l'une quelconque des revendications précédentes, dans lequel le nombre d'éléments de canal d'organisation de la cellule (10) de voisinage ou de chevauchement disponibles pour le canal d'organisation est obtenu en lisant un bloc d'information maître radiodiffusé par la cellule (10) de voisinage ou de chevauchement, en calculant un nombre de groupes d'éléments de ressource disponibles pour tous les canaux d'organisation en liaison descendante et en soustrayant un nombre de groupes d'éléments de ressource disponibles pour des canaux d'organisation, autres que le canal d'organisation, et en calculant un nombre d'éléments de canal d'organisation sur la base des groupes d'éléments de ressource disponibles pour le canal d'organisation, les ressources potentielles étant définies par un jeu de candidats consistant en des éléments de canal d'organisation à des niveaux d'agrégation différents.

**6.** Procédé suivant la revendication 5, dans lequel, en outre, on identifie des ressources potentielles communes à des cellules (destinées à tous les dispositifs terminaux) du canal d'organisation de la cellule (10) de voisinage ou de chevauchement en utilisant un nombre total d'éléments de canal d'organisation disponibles pour le canal d'organisation.

**7.** Procédé suivant la revendication 6, dans lequel on déduit la métrique de collision pour chaque candidat de canal d'organisation de la cellule (12) cible d'une matrice de collision, qui indique un chevauchement entre des éléments de ressource de la cellule (12) cible et des éléments de ressource du canal d'organisation de la cellule (10) de voisinage ou de chevauchement.

**8.** Dispositif pour protéger un canal d'organisation d'une cellule (10) de voisinage ou de chevauchement d'une interférence provoquée par une cellule (12) cible d'un réseau cellulaire, le dispositif comprenant :

a. une unité (242) de commande d'interférence pour déterminer la présence d'un dispositif (30) terminal victime desservi par la cellule (10) de voisinage ou de chevauchement sur la base d'au moins l'une de transmissions détectées en liaison montante du dispositif (30) terminal victime et du signalement par la cellule (10) de voisinage ou de chevauchement ;

b. un identificateur (2422) de ressource pour identifier des ressources potentielles du dispositif (30) terminal victime dans le canal d'organisation de la cellule (10) de voisinage ou de chevauchement, l'identificateur (2422) de ressource étant configuré pour effectuer l'identification des ressources potentielles en déterminant une identité du dispositif (30) terminal victime, un nombre de sous-trames et un nombre total d'éléments de canal d'organisation disponibles pour le canal d'organisation dans la cellule (10) de voisinage ou de chevauchement ;

c. un identificateur (2424) de collision pour calculer une métrique de collision pour des ressources de canal de la cellule (12) cible, la métrique de collision indiquant un degré de collision avec des ressources potentielles utilisées pour le dispositif (30) terminal victime de la cellule (10) de voisinage ou de chevauchement ; et

d. une unité (244) de commande de canal pour affecter des ressources à un canal de la cellule (12) cible sur la base de la métrique de collision.

**9.** Dispositif suivant la revendication 8, dans lequel l'identificateur (2422) de ressource est conçu pour lire un bloc d'information maître radiodiffusé par la cellule (10) de voisinage ou de chevauchement, pour calculer un nombre de groupes d'éléments de ressource disponibles pour tous les canaux d'organisation en liaison descendante et pour soustraire un nombre de groupes d'éléments de ressource disponibles pour des canaux d'organisation, autres que le canal d'organisation, afin d'obtenir un nombre de groupes d'éléments de ressource disponibles pour le canal d'organisation et pour calculer un nombre d'éléments de canal d'organisation sur la base des groupes d'éléments de ressource disponibles pour le canal d'organisation.

**10.** Dispositif suivant la revendication 9, dans lequel le dispositif est conçu pour effectuer l'identification des ressources potentielles dédiées, qui pourraient être utilisées par le dispositif (30) terminal victime, en déterminant une identité du dispositif (30) terminal victime, un nombre de sous-trames et un nombre total d'éléments de canal d'organisation disponibles pour le canal d'organisation dans la cellule (10) de voisinage ou de chevauchement.

**11.** Dispositif suivant la revendication 9, dans lequel le dispositif est conçu pour identifier des ressources communes, qui pourraient être utilisées pour tous les dispositifs terminaux dans la cellule de voisinage ou de chevauchement, en déterminant un nombre total d'éléments de canal d'organisation disponibles pour le canal d'organisation dans la cellule (10) de voisinage ou de chevauchement.

**12.** Dispositif suivant la revendication 11, dans lequel l'identificateur (2424) de collision est conçu pour déduire la métrique de collision d'une matrice de collision, qui indique un chevauchement entre des éléments de ressource de la cellule (12) cible et des éléments de ressource de la cellule (10) de voisinage ou de chevauchement.

**13.** Dispositif suivant la revendication 12, dans lequel l'identificateur (2424) de collision est conçu pour évaluer un jeu de candidats de canal d'organisation à des niveaux d'agrégation différents.

**14.** Dispositif d'accès à un réseau comprenant un dispositif suivant l'une quelconque des revendications 8 à 13.

**15.** Produit de programme d'ordinateur comprenant des moyens de code pour produire les stades du procédé de la revendication 1, lorsqu'il passe sur un dispositif d'ordinateur.

# Fig. 1

# Fig. 2

START

Detection
of victim UE(s)                          S101

Determination of the most
dominating co-channel
MBTS                                     S102

Time-synchronisation
with MBTS                                S103

Obtaining bandwidth
configuration of MBTS                    S104

Obtaining PCFICH
configuration of MBTS                    S105

Reading PCFICH
of MBTS                                  S106

Calculation of number of
CCEs in MBTS                             S107

Identification of common
search space of MBTS                     S108

Identification of dedicated
search space of victim-UE                S109

Calculation of collision
matrix                                   S110

PDCCH Assignment                         S111

PUSCH Assignment                         S112

END

# Fig. 3

EP 2 466 940 B1

400

410

DI

PU

DO

412

MEM

# Fig. 4

18

**EP 2 466 940 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20100238884 A1